# DEMANDE DE BREVET EUROPEEN

(11) **EP 2 009 546 A1**
(43) Date de publication de la demande: **31.12.2008**
(21) Numéro de dépôt: 08157138.2
(22) Date de dépôt: 29.05.2008
(51) Int. Cl.: G06F 9/445, G06F 9/50, H04L 29/08

(54) **Procédé d'exécution d'une application d'interface utilisateur comprenant une séquence d'inversion temporaire**

(30) Priorité: 29.06.2007 FR 0756154
(71) Demandeur: Alcatel Lucent, 75008 Paris (FR)
(72) Inventeur: Irac, Olivier, 95320, ST LEU LA FORET (FR); Pulrulczyk, Cédric, 27400 ACQUIGNY (FR)
(74) Mandataire: Hervouet, Sylvie

(57) **Abrégé**

Procédé d'exécution d'une application d'interface utilisateur interactive répartie entre un client (2) terminal équipant un utilisateur et un serveur (1) centre de ressources, au sein d'un réseau, caractérisé en ce qu'il comprend pour la réalisation d'une interaction, une séquence d'inversion temporaire comprenant les étapes de :
- envoi d'un message (20) d'initialisation de séquence d'inversion temporaire, par le client (2) au serveur (1), et
- démarrage, par le client (2), d'un module alternatif client,
- réception dudit message (20) d'initialisation par le serveur (1), et
- démarrage, par le serveur (1), d'un module alternatif serveur contrôlant le déroulement du séquencement de l'interface utilisateur,
- envoi d'un message (24) de terminaison de séquence d'inversion temporaire, par le serveur (1) au client (2), lorsque l'interaction est terminée.

## Description

La présente invention concerne un procédé d'exécution d'une application d'interface utilisateur interactive comprenant une séquence d'inversion temporaire.

Dans le domaine des réseaux de communication comprenant au moins un serveur centre de ressources et une pluralité de clients terminaux équipant chacun un utilisateur, ledit utilisateur requiert des services auprès dudit serveur au moyen de son terminal. Les applications initiales de téléphonie se sont diversifiées et offrent de nos jours des services de plus en plus variés tel que fax, e-mail, consultation Internet, télédiffusion d'émission radio, d'émission de télévision ou encore de vidéo. De telles offres proposent de nouveaux défis, en ce que la structure et la nature des paramètres à échanger entre l'utilisateur et le serveur peuvent être très variées, en ce qu'elles concernent des aspects très différents tels que: transmission des programmes en ligne, choix d'une chaîne de radio ou de télévision, échanges nécessaire à la mise en place d'une transmission de contenu, ou encore les aspects liés à la facturation des services. Certains de ces aspects s'avèrent de plus, très évolutifs afin de suivre l'évolution rapide des offres ou de la pratique commerciale.

Afin de réaliser tous les échanges préparatoires à la fourniture par le serveur d'un service à l'utilisateur d'un terminal, il convient de mettre en place une application d'interface utilisateur interactive. Une telle application est, dans le cas d'un réseau, répartie entre le client terminal et le serveur centre de ressources. Des échanges interactifs entre l'utilisateur, via son terminal, et le serveur, permettent de convenir, au travers des choix de l'utilisateur, du contenu exact du service que va ensuite offrir le serveur à l'utilisateur. Selon un scénario type, le terminal client affiche à l'utilisateur des pages reflétant les possibilités de services offertes par le serveur. L'utilisateur, en sélectionnant parmi les choix qui lui sont proposés, d'une part effectue des choix et d'autre part permet à l'application de se poursuivre. En fonction des choix de l'utilisateur, l'application d'interface utilisateur, d'une part définit le service attendu et d'autre part propose, le cas échéant, de nouvelles pages adaptées à l'utilisateur, afin de faire préciser interactivement d'autre paramètres nécessaires au service.

Une telle application d'interface utilisateur interactive comprend donc une partie ou module "serveur" s'exécutant sur le serveur de ressource et une partie ou module "client" s'exécutant sur le client terminal. Ces deux parties dialoguent entre elles via le réseau et constituent ensemble, l'application d'interface utilisateur interactive.

Actuellement, le module client est responsable du dialogue et gère la logique de l'interface. Ainsi, la partie client contient les éléments de définition de l'interface. Les pages interactives sont prédéfinies au sein du module client et le module client affiche sur le terminal, à l'attention de l'utilisateur lesdites pages. Ces pages comprennent des emplacements (en anglais : "placeholder"), pour des champs variables. Ces champs variables contiennent les seuls éléments modifiables et non prédéfinis au sein du client. Ils sont renseignés à partir de données fournies par un module serveur. De cette manière, seule une valeur peut être modifiée.

Ainsi, par exemple, un menu proposant deux options d'abonnement : 1 mois pour 18 € ou 6 mois pour 90 €, proposé à l'utilisateur, comprendrait 4 champs variables : 1m, 18€, 6m, 90€, dont il est possible de modifier les valeurs en changeant ces valeurs au sein du module serveur. Il n'est cependant pas possible d'ajouter une troisième option sans modifier le module client.

La pratique actuelle est justifiée et avantageuse en ce qu'elle laisse la responsabilité du dialogue au module client et permet, par une bonne utilisation de la puissance de traitement locale du client, d'obtenir de bons temps de réponse. Ces temps de réponse sont garantis, puisque non soumis aux aléas d'une transmission par le réseau.

Cependant, cette pratique présente aussi l'inconvénient majeur de limiter l'évolutivité de l'application d'interface utilisateur. Une modification de la structure du dialogue nécessite une modification du module client. Les clients étant par nature nombreux et disséminés avec la multitude d'utilisateurs, une telle modification s'avère en pratique très difficile. Il serait plus simple de limiter les modifications au niveau du serveur, par nature central.

La présente invention remédie à ces différents inconvénients en proposant une application d'interface utilisateur interactive, où la responsabilité du dialogue peut être inversée. Selon un mode nominal, l'application d'interface utilisateur confie la responsabilité du dialogue au client. Il est néanmoins possible de réaliser une séquence d'inversion temporaire, pendant laquelle la responsabilité du dialogue est confiée au serveur. Ainsi, pour certaines interactions, le client peut temporairement transférer la responsabilité du dialogue au serveur. Ce dernier confie à nouveau ladite responsabilité en retour au client, à la fin de l'interaction.

L'invention a pour objet un procédé d'exécution d'une application d'interface utilisateur interactive répartie entre un client terminal équipant un utilisateur et un serveur centre de ressources, au sein d'un réseau, caractérisé en ce qu'il comprend pour la réalisation d'une interaction, une séquence d'inversion temporaire comprenant les étapes de :
- envoi d'un message d'initialisation de séquence d'inversion temporaire, par le client au serveur, et
- démarrage, par le client, d'un module alternatif client
   - affichant, sur le terminal à l'attention de l'utilisateur, des pages interactives,
   - lisant en retour des choix de l'utilisateur, pour les transmettre à un module alternatif serveur,
- réception dudit message d'initialisation par le serveur, et
- démarrage, par le serveur, dudit module alternatif serveur:
   - produisant des pages interactives affichables par ledit module alternatif client,
   - transmettant lesdites pages interactives au module alternatif client,
   - recevant les choix de l'utilisateur en retour du module alternatif client,
afin de contrôler le déroulement du séquencement de l'interface utilisateur,
- envoi d'un message de terminaison de séquence d'inversion temporaire, par le serveur au client, lorsque l'interaction est terminée.

Selon une autre caractéristique de l'invention, le procédé comprend encore, préalablement à la séquence d'inversion, les étapes suivantes :
- exécution, par le client, d'un module nominal client :

- affichant, sur le terminal, à l'attention de l'utilisateur, des pages interactives prédéfinies au sein du module nominal client, comprenant des champs variables, les valeurs desdits champs variables étant renseignées à partir de données fournies par un module nominal serveur,
- lisant en retour des choix interactifs de l'utilisateur, et
- traitant lesdits choix interactifs, afin de contrôler le déroulement du séquencement de l'interface utilisateur,
- exécution, par le serveur, d'un module nominal serveur, apte à répondre aux requêtes de données issues du module nominal client.

Selon une autre caractéristique de l'invention,
- l'envoi du message d'initialisation de séquence d'inversion temporaire, s'accompagne d'une fin d'exécution, par le terminal, du module nominal client,
- la réception du message d'initialisation de séquence d'inversion temporaire, s'accompagne d'une fin d'exécution, par le centre de ressources, du module nominal serveur.

Selon une autre caractéristique de l'invention, le procédé comprend encore les étapes suivantes :
- réception du message de terminaison de séquence d'inversion temporaire, par le terminal,
- démarrage, par le client, d'un module nominal client :
   - affichant, sur le terminal, à l'attention de l'utilisateur, des pages interactives prédéfinies au sein du module nominal client, comprenant des champs variables, les valeurs desdits champs variables étant renseignées à partir de données fournies par un module nominal serveur,
   - lisant en retour des choix interactifs de l'utilisateur, et
   - les traitant, afin de contrôler le déroulement du séquencement de l'interface utilisateur,
   - démarrage, par le serveur, d'un module nominal serveur, apte à répondre aux requêtes de données issues du module nominal client.

Un avantage du procédé selon l'invention est la mise en place de deux modes, nominal et alternatif, possédant chacun leur avantages respectifs, associée à une possible inversion entre ces modes, afin de bénéficier, selon le type d'interaction, des avantages les plus adaptés à l'interaction.

D'autres caractéristiques, détails et avantages de l'invention ressortiront plus clairement de la description détaillée donnée ci-après à titre indicatif en relation avec des dessins sur lesquels :
- la figure 1 représente un réseau figuré par un serveur et un client,
- la figure 2 illustre la construction d'une page interactive selon le mode nominal et selon le mode alternatif,
- la figure 3 est un schéma de principe chronologique d'une séquence d'inversion temporaire,
- la figure 4 est un exemple de la syntaxe d'une page XML en mode alternatif.

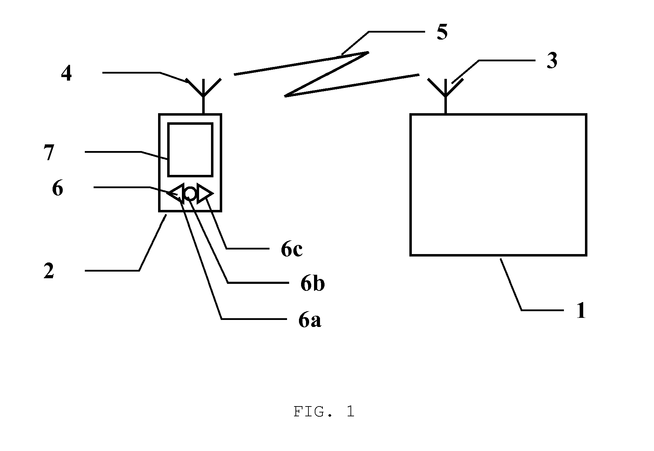

Selon la figure 1, un serveur 1 centre de ressources d'un réseau, et un client 2 terminal exécutent conjointement une application d'interface utilisateur interactive. Pour cela, ladite application est répartie entre un module serveur exécuté par le serveur 1 et un module client exécuté par le client 2. Ces deux modules serveur et client, pour les besoins de l'application, échangent des données entre eux via l'infrastructure de réseau . Le réseau est à titre illustratif ici un réseau sans fil hertzien figuré ici par une antenne serveur 3, une antenne client 4 et un rayonnement hertzien 5. Cependant, l'invention est applicable à tout réseau avec ou sans fil. Les choix opérés par l'utilisateur du client terminal 1 s'effectuent tous au niveau du client terminal 1. Pour cela le client terminal 1 comprend au moins un écran d'affichage 7, pour présenter les pages à l'utilisateur, et un dispositif d'entrée 6 permettant à l'utilisateur de naviguer dans et entre les pages interactives et d'effectuer des choix. Le dispositif d'entrée 6 est à titre indicatif un clavier comprenant deux flèches 6a, 6c de navigation et une touche d'activation 6b.

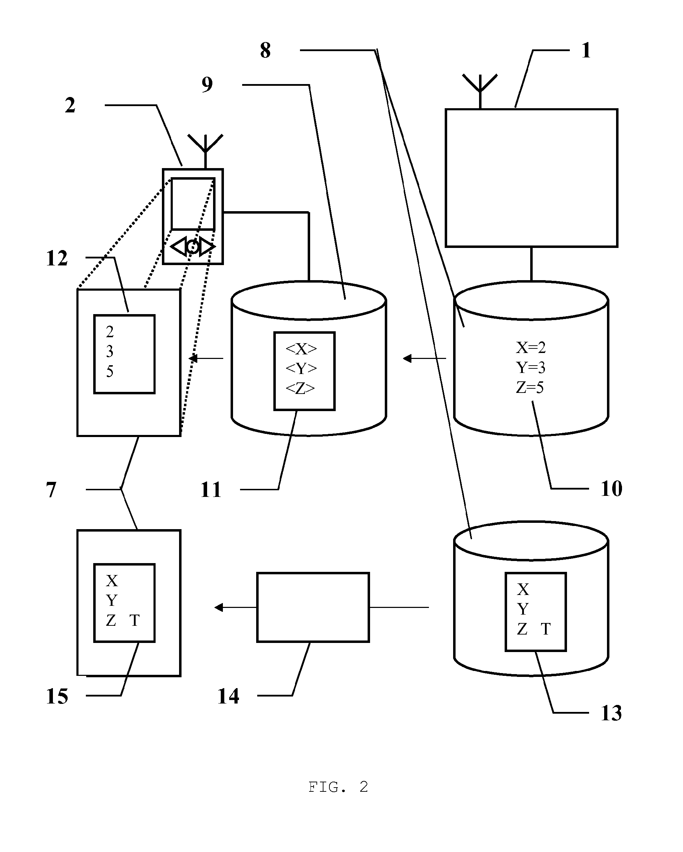

La figure 2, illustre les deux modes de fonctionnement nominal et alternatif selon l'invention.

Selon le mode nominal, correspondant au seul mode existant dans l'état de l'art, l'application d'interface utilisateur se répartit en deux modules dialoguant entre eux via le réseau. Un premier module nominal client est exécuté par le client 2 tandis qu'un second module nominal serveur est exécuté par le serveur 1.

La différence essentielle entre ces deux modes, est la manière de construire une page interactive, destinée à être présentée à l'utilisateur. A la figure 2, une première "ligne" figure le serveur 1 et le client 2. En dessous apparaissent une seconde ligne illustrant le mode nominal et une troisième ligne illustrant le mode alternatif.

Dans le mode nominal, une page 12 présentée à l'utilisateur sur l'écran 7 du terminal client 2 est construite par le client 2 au sein du module nominal client. Pour cela la mémoire 9 du client 2 contient la structure complète de la page 11. De manière analogue, les actions à réaliser en fonction des choix réalisés par l'utilisateur, qui conditionnent la logique du dialogue et notamment l'enchaînement des pages et/ou les actions à déclencher, sont prédéterminées et contenues dans la mémoire 9 du client 2. Le seul paramétrage possible est obtenu via des emplacements figurés par des symboles <>, encadrant un nom de paramètre. Ainsi, la page modèle 11 de la figure 2 comporte trois champs variables <X>, <Y> et <Z>. Lorsque l'application doit afficher une page finale 12, une page modèle 11 est extraite de la mémoire 9 du client 2. Les champs variables <X>, <Y> et <Z> sont instanciés avec des valeurs X, Y, Z. Pour cela le module nominal client échange avec le module nominal serveur. Ce dernier consulte la mémoire 8 du serveur 1 et en extrait des valeurs 10. Dans l'exemple, X vaut 2, Y vaut 3 et Z vaut 5. Le module nominal client remplace, aux emplacements déterminés <X>, <Y> et <Z> de la page modèle 11, les paramètres par lesdites valeurs afin de produire la page finale 12.

Il résulte du mode opératoire de ce mode nominal que seul les valeurs 10 sont connues et modifiables par le serveur 1. La totalité de la logique du dialogue utilisateur de l'application et la structure des pages sont définis dans le client 2 et sa mémoire 9, une modification de la logique du dialogue ou de la structure d'une page nécessite une modification du client 2. Une telle solution est actuellement retenue pour la plupart des applications du marché en raison de ses bonnes performances en terme de temps de réponse. Les éléments étant disponibles localement sont accessibles par le module nominal client rapidement, même en cas de perturbation ou d'absence du réseau. Le client 2 est responsable et maîtrise la logique du dialogue utilisateur. Ceci est bien adapté à des applications gérant des interactions courantes peu évolutives.

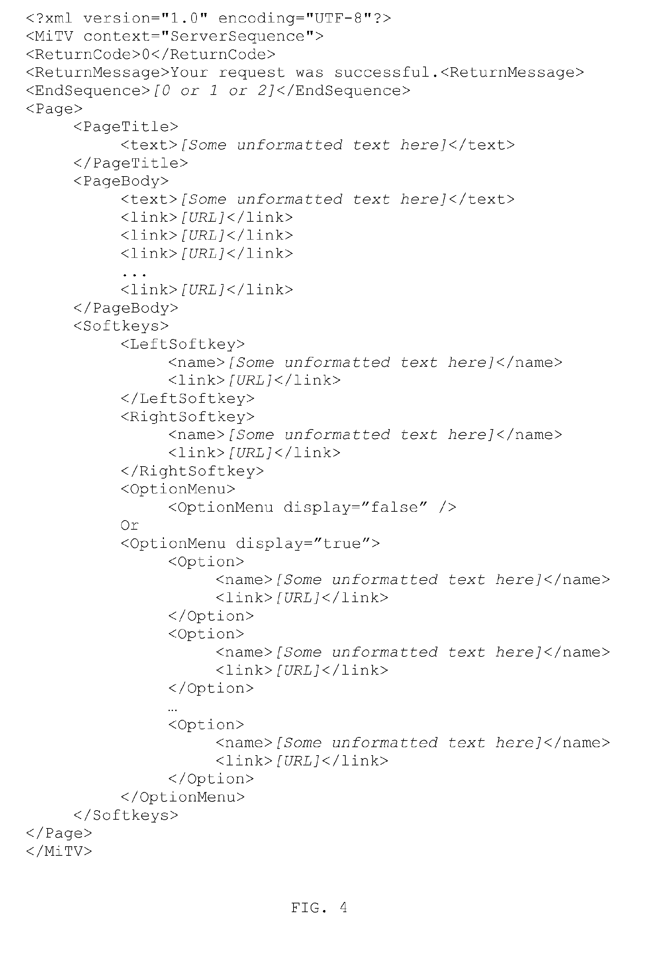

Afin de pouvoir offrir une plus grande évolutivité du dialogue, et donc de l'application dans son ensemble, l'invention propose un second mode, ou mode alternatif, dans lequel, la structure des pages et la logique de dialogue sont stockées sur le serveur 1. Ceci rend ces informations plus simplement modifiable, de manière centrale et donc unique. Ce mode alternatif est encore nommé mode "browser" en raison de sa similitude avec le mode d'échange entre un client d'un "browser" web et son serveur. Pour cela la totalité des éléments conditionnant le dialogue utilisateur sont présents au niveau du serveur 1. Ainsi les pages complètes, comprenant tant les éléments à afficher, que les choix possibles de l'utilisateur en réponse, et encore les actions déclenchées par l'application en réponse aux différents choix, sont entièrement définies au sein de pages 13 stockées dans la mémoire 8 du serveur 1. La figure 4 présente un exemple de listing d'une page dans un langage XML classique de description de données. Dans ce mode alternatif, le module alternatif serveur transmet une page 13 au module alternatif client. Cette page 13 peut être décrite dans tout langage de description de données adapté, par exemple en XML. Le cas échéant cette page est interprétée par un interpréteur 14, afin de la traduire sous une forme compréhensible par le module alternatif client, pour qu'elle puisse être affichée sur l'écran 7 du client 2 à l'attention de l'utilisateur. Une page 13 contient, tant les éléments affichables et leur disposition dans la page, que les choix offerts à l'utilisateur, ainsi que les actions associées à ces choix. Le module alternatif client se contente d'afficher la page et de renvoyer au serveur les actions associées aux choix effectués par l'utilisateur au moyen du dispositif d'entrée 6. Ainsi la logique et la responsabilité du dialogue utilisateur sont du ressort du serveur 1. Une modification d'une application, pour une interaction donnée, nécessite uniquement une modification centrale du module alternatif serveur et peut ensuite être propagée et rendu accessible à tous les clients du réseau.

Il apparaît au vu des avantages, que le mode alternatif permet une forte évolutivité en ce qui concerne la structure, le contenu et l'organisation d'un dialogue utilisateur. Cependant un tel mode rend le client 2 beaucoup plus dépendant du serveur 1. Un plus gros volume de données doit être échangé entre le client 2 et le serveur 1, une page complète 13 "pesant" plus lourd que des données 10. De plus le module alternatif client étant un simple afficheur ne peut rien exécuter seul en cas de problème de transmission réseau.

Selon une caractéristique de l'invention, il est proposé de réaliser une application d'interface utilisateur interactive, répartie entre un client 2 terminal et un serveur 1 centre de ressources, au sein d'un réseau, employant par défaut le mode nominal tel que précédemment décrit, et pour les besoins de certaines application particulières, par exemple très sujettes à évolution, employant le mode alternatif.

Afin de passer d'un mode à l'autre, il est indispensable de gérer la transition. Pour cela, selon une caractéristique de l'invention, est réalisée une séquence d'inversion temporaire.

Depuis le mode nominal, où l'application comprend un module nominal client s'exécutant sur le client 2, et un module nominal serveur s'exécutant sur le serveur 1 et dialoguant entre eux, l'application d'interface utilisateur interactive bascule vers le mode alternatif selon la séquence d'étapes suivantes :
- le client 2 envoie un message d'initialisation de séquence d'inversion temporaire au serveur 1, et
- démarre un module alternatif client,
- le serveur 1 reçoit le message d'initialisation, et
- démarre le module alternatif serveur.
- le serveur 1 envoi un message de terminaison de séquence d'inversion temporaire au client 2, lorsque l'interaction est terminée.

Le module alternatif client a pour fonctions :
- affichage, sur le client 2 terminal à l'attention de l'utilisateur, des pages interactives,
- lecture en retour des choix de l'utilisateur, et transmission au module alternatif serveur.

Le module alternatif serveur a pour fonctions :
- production, par exemple par extraction depuis un stockage mémoire 8, des pages interactives affichables par le module alternatif client,
- transmission desdites pages interactives au module alternatif client,
- réception des choix de l'utilisateur en retour du module alternatif client. En fonction de ces choix, le module alternatif serveur, contrôle le déroulement du séquencement de l'interface utilisateur, en sélectionnant la nouvelle page à afficher ou l'action à commander.

Durant la séquence d'inversion, lorsque les modules alternatifs sont opérationnels, l'application est en mode alternatif.

Ainsi il apparaît que le client 2 initie, via un message d'initialisation de séquence d'inversion temporaire, la séquence d'inversion, durant laquelle il transmet la responsabilité du dialogue utilisateur au serveur 1. Lorsque le serveur 1 a terminé l'interaction pour laquelle la responsabilité lui a été transférée, le serveur 1 termine la séquence en envoyant un message de terminaison de séquence d'inversion temporaire au client 2 pour l'informer que la responsabilité du dialogue utilisateur lui est rendue.

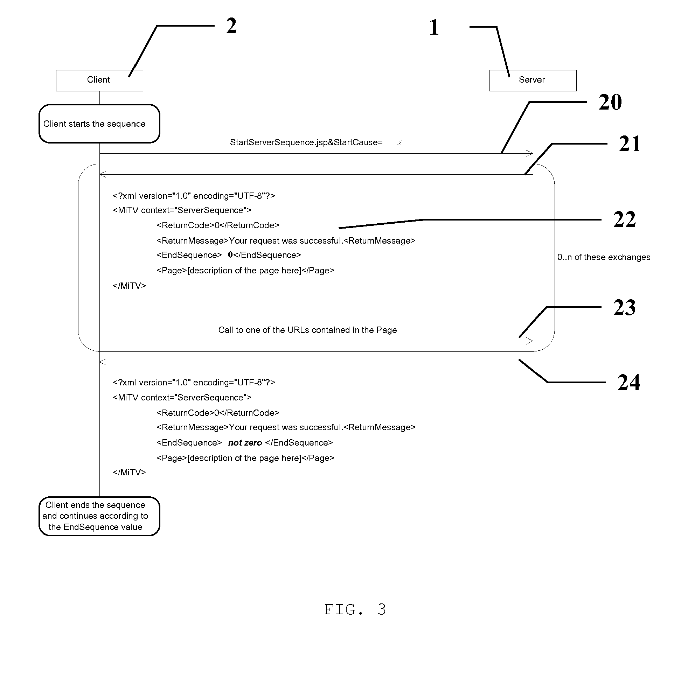

Ceci est encore illustré à la figure 3, qui présente le principe de la séquence d'inversion. La figure 3 représente le client 2 en colonne de gauche, le serveur 1 en colonne de droite et les différents échanges entre eux, par des flèches annotées. La séquence d'inversion comprend les étapes suivantes. Le client 2 envoie un message 20 d'initialisation de séquence d'inversion temporaire au serveur 1. Après réception dudit message d'initialisation le serveur 1 envoie au moins un message 21 contenant tous les éléments et notamment la définition d'une page 22. Le client 2 répond par un message 23 contenant les choix de l'utilisateur, par exemple sous forme d'URLs associées à ladite page. L'échange précédent des messages 21, 23, peut se reproduire autant de fois que nécessaire à la réalisation d'une interaction. Enfin, lorsque l'interaction est complète, le serveur 1 envoi un message 24 de terminaison de séquence d'inversion temporaire au client 2.

L'application fonctionne en mode nominal avant ou après une séquence d'inversion temporaire. Dans ce mode nominal, le client 2 exécute un module nominal client, tandis que le serveur 1 exécute un module nominal serveur.

Le module nominal client a pour fonctions :
- affichage, sur l'écran 7 du client 1 de pages 12 interactives prédéfinies au sein du module nominal client, par exemple dans une mémoire 9 du client 2. Ces pages 12 peuvent comprendre des champs variables, les valeurs desdits champs variables étant renseignées à partir de données 10 fournies par le module nominal serveur,
- lecture en retour des choix interactifs de l'utilisateur,
- traitement desdits choix interactifs, afin de contrôler le déroulement du séquencement de l'interface utilisateur.

Le module nominal serveur a pour fonction de répondre aux requêtes de données 10 issues du module nominal client.

Les différents modules, tant client que serveur, sont des entités ou parties de l'application. Il peut s'agir de routines, de taches ou de tout autre moyen équivalent. Ces modules sont exécutés en fonction du besoin, et il peut être mis fin à leur exécution ou ils peuvent simplement être mis en sommeil, lorsque non utilisés.

La figure 4 présente un exemple de syntaxe utilisable en mode alternatif pour définir une page 13 transmise par le serveur 1 au client 2. Une telle page 13, ici décrite en langage XML, comprend les blocs descriptifs suivants. Après un bloc entête, apparaissent les blocs ReturnCode, ReturnMessage et EndSequence qui déterminent le comportement du client à réception de la page. La page proprement dite est ensuite définie par un titre indiqué par le bloc PageTitle, un corps défini par le bloc PageBody, une action associée à l'appui par l'utilisateur sur une touche gauche 6a définie par un bloc LeftSoftKey, respectivement une touche droite 6c définie par un bloc RightLeftSoftKey. Ces blocs comprennent un texte affiché à l'écran en correspondance avec la touche réelle 6a, 6c et une URL qui est retournée au serveur 1 lorsque l'utilisateur sélectionne la touche associée. Le bloc OptionMenu définit la présence et le contenu d'un menu optionnel.

## Revendications

1. Procédé d'exécution d'une application d'interface utilisateur interactive répartie entre un client (2) terminal équipant un utilisateur et un serveur (1) centre de ressources, au sein d'un réseau, **caractérisé en ce qu'**il comprend pour la réalisation d'une interaction, une séquence d'inversion temporaire comprenant les étapes de :
- envoi d'un message (20) d'initialisation de séquence d'inversion temporaire, par le client (2) au serveur (1), et
- démarrage, par le client (2), d'un module alternatif client
- affichant, sur le terminal à l'attention de l'utilisateur, des pages interactives,
- lisant en retour des choix de l'utilisateur, pour les transmettre à un module alternatif serveur,
- réception dudit message (20) d'initialisation par le serveur, et
- démarrage, par le serveur, dudit module alternatif serveur:
- produisant des pages interactives affichables par ledit module alternatif client,
- transmettant lesdites pages interactives au module alternatif client,
- recevant les choix de l'utilisateur en retour du module alternatif client,
afin de contrôler le déroulement du séquencement de l'interface utilisateur,
- envoi d'un message (24) de terminaison de séquence d'inversion temporaire, par le serveur (1) au client (2), lorsque l'interaction est terminée.

2. Procédé selon la revendication 1, où le procédé comprend encore, préalablement à la séquence d'inversion, les étapes suivantes :
- exécution, par le client (2), d'un module nominal client:
- affichant, sur le terminal, à l'attention de l'utilisateur, des pages interactives prédéfinies au sein du module nominal client, comprenant des champs variables, les valeurs desdits champs variables étant renseignées à partir de données (10) fournies par un module nominal serveur,
- lisant en retour des choix interactifs de l'utilisateur, et
- traitant lesdits choix interactifs, afin de contrôler le déroulement du séquencement de l'interface utilisateur,
- exécution, par le serveur (1), d'un module nominal serveur, apte à répondre aux requêtes de données issues du module nominal client.

3. Procédé selon la revendication 2, où :
- l'envoi du message (20) d'initialisation de séquence d'inversion temporaire, s'accompagne d'une fin d'exécution, par le terminal, du module nominal client,
- la réception du message (20) d'initialisation de séquence d'inversion temporaire, s'accompagne d'une fin d'exécution, par le centre de ressources, du module nominal serveur.

4. Procédé selon la revendication 3, où le procédé comprend encore les étapes suivantes :
- réception du message (24) de terminaison de séquence d'inversion temporaire, par le client (2),
- démarrage, par le client (2), d'un module nominal client :
- affichant, sur le client (2), à l'attention de l'utilisateur, des pages interactives prédéfinies au sein du module nominal client, comprenant des champs variables, les valeurs desdits champs variables étant renseignées à partir de données (10) fournies par un module nominal serveur,
- lisant en retour des choix interactifs de l'utilisateur, et
- les traitant, afin de contrôler le déroulement du séquencement de l'interface utilisateur,
- démarrage, par le serveur (1), d'un module nominal serveur, apte à répondre aux requêtes de données issues du module nominal client.
